# EUROPEAN PATENT SPECIFICATION

(11) **EP 2 700 559 B1**
(45) Date of publication and mention of the grant of the patent: **30.05.2018**
(21) Application number: 13177344.2
(22) Date of filing: 22.07.2013
(51) Int. Cl.: B62B 7/08, B62B 9/26

(54) **Foldable stroller frame**
Zusammenklappbarer Kinderwagenrahmen
Châssis de poussette pliable

(30) Priority: 22.08.2012 CN 201210300618
(43) Date of publication of application: 26.02.2014
(73) Proprietor: Wonderland Switzerland AG, 6312 Steinhausen (CH)
(72) Inventor: Zhong, Zhi-Ren, Hong Kong (CN)
(74) Representative: Regimbeau

(56) References cited:
- EP-A2- 1 842 760
- CN-U- 201 816 628
- GB-A- 2 425 095
- US-B1- 6 626 451

## Description

This invention relates to a stroller, and more particularly to a stroller frame that can be folded into a compact structure.

Strollers are used widely in families having children. Such a stroller typically includes a foldable stroller frame mountable selectively with a bassinet, a child seat, or a car safety seat. During use, the stroller frame is unfolded, and a selected one of the bassinet, the child seat, and the car safety seat is mounted thereto. When not in use, the bassinet, the child seat, or the car safety seat is first removed from the stroller frame. Next, the stroller frame is folded so that it is convenient to store or transport.

However, conventional foldable stroller frames have a complicated structure, so that their folded volumes are relatively large.

Document US 6 626 451 represents the closest prior art and describes a collapsible stroller including a handle rod; two sub-frames connected to the handle rod, the two sub-frames including a front leg with an upper end and a rotatable front wheel disposed under the front leg, and a rear leg with a an upper end and a rotatable rear wheel disposed under the rear leg, the upper end of the front leg rotatably connected to the upper end of the rear leg; a front connecting rod including one end rotatably connected to the handle rod and another end rotatably connected to the upper end of the front leg and the upper end of the rear leg; a seat mounted between the sub-frames for carrying an occupant; a front supporting rod rotatably mounted to the front leg; a rear supporting rod rotatably connected to the front supporting rod and mounted to the rear leg; a first pull rod rotatably connected to the rear leg, the first pull rod including an end rotatably connected to the handle rod and another end; and a second pull rod including an end rotatably coupled to the other end of the first pull rod and another end rotatably connected to the front supporting rod and the rear supporting rod.

Document EP 1 842 760 describes a collapsible stroller frame including a front support, a rear support and a foldable carrier pivotally connected between the front and rear supports. The foldable carrier comprises U-shaped front and rear parts ends of which are connected by a pivotal interconnection. On each side of the frame, a sliding sleeve, for supporting a seat is slidably mounted on the front support and a link rod depends from the sliding sleeve. A lower end of each link rod is pivotally connected to a respective pivotal interconnection of the foldable carrier. When the stroller frame is collapsed, the sliding sleeves are disengaged from the front support so that they can slide down it. The resulting downward movement of the link rods causes the front and rear parts of the carrier to fold into a V-shaped configuration.

Therefore, the object of this invention is to provide a foldable stroller frame capable of being folded into a compact structure. This object is achieved by a stroller frame according to claim 1. Preferred embodiments are defined in the dependent claims. According to this invention, a stroller frame includes a main frame body, two front legs, two rear legs, a basket tube, two seat-retaining members, and two connecting assemblies. The basket tube includes a basket front tube section and a basket rear tube section, each of which has two free ends. The two free ends of the basket front tube section are connected respectively and pivotally to the two free ends of the basket rear tube section. The basket front tube section is connected pivotally to the front legs. The basket rear tube section is connected pivotally to the rear legs. Each of the connecting assemblies includes a basket-connecting member having an upper end connected pivotally to a lower end of the main frame body, and a lower end connected pivotally to the basket rear tube section.

These and other features and advantages of this invention will become apparent in the following detailed description of the preferred embodiments of this invention, with reference to the accompanying drawings, in which:
Fig. 1 is a perspective view of the first preferred embodiment of a stroller frame according to this invention;
Fig. 2 is a fragmentary perspective view of the first preferred embodiment, two seat-retaining members and two second housings being removed for illustrating first and second basket-connecting members;
Fig. 3 is a fragmentary perspective view of the first preferred embodiment, two first housings and the second housings being removed for illustrating the first and second basket-connecting members and an upper connecting member;
Fig. 4 is a perspective view of the first preferred embodiment when it is in a semi-folded state;
Fig. 5 is a perspective view of the first preferred embodiment when it is in a fully folded state; and
Fig. 6 is a fragmentary perspective view of the second preferred embodiment of a stroller frame according to this invention.

Before the present invention is described in greater detail in connection with the preferred embodiments, it should be noted that similar elements and structures are designated by like reference numerals throughout the entire disclosure.

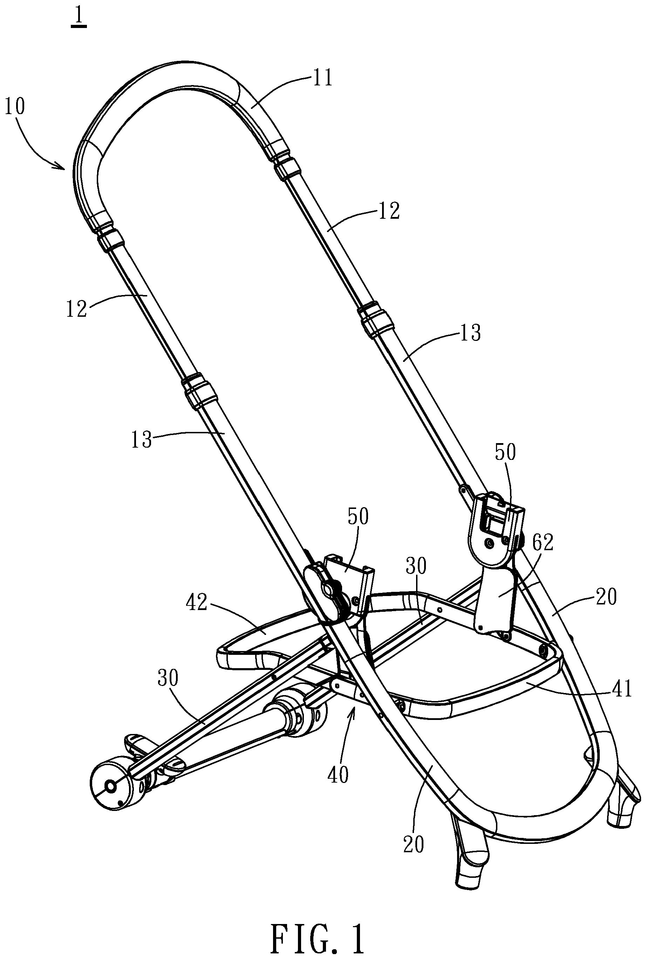

Referring to Fig. 1, the first preferred embodiment of a stroller frame 1 according to this invention includes a main frame body 10, two front legs 20, two rear legs 30, a basket tube 40, and two seat-retaining members 50. The main frame body 10 includes an inverted U-shaped handle 11, two upper frame sections 12 having upper ends connected respectively to and disposed below two ends of the handle 11, and two lower frame sections 13 connected respectively and telescopically to and disposed below the upper frame sections 12. The upper frame sections 12 are movable relative to the lower frame sections 13 for adjusting the height of the main frame body 10. When the stroller frame 1 is folded, the upper frame sections 12 are retracted respectively into the lower frame sections 13 to reduce the folded volume of the stroller frame 1.

Lower ends of the lower frame sections 13 are connected respectively and pivotally to upper ends of the two front legs 20. The two rear legs 30 are connected respectively and pivotally to the two front legs 20 at positions adjacent to the upper ends of the two front legs 20. The basket tube 40 is connected pivotally to the two front legs 20 and the two rear legs 30. Each of the seat-retaining members 50 is disposed at a junction between the corresponding lower frame section 13 and the corresponding front leg 20, and is used to retain a seat (not shown). When not in use, the seat can be removed for storage, so as to reduce the folded stroller frame 1. If necessary, the upper frame sections 12 can be retracted into the lower frame sections 13 during folding of the stroller frame 1.

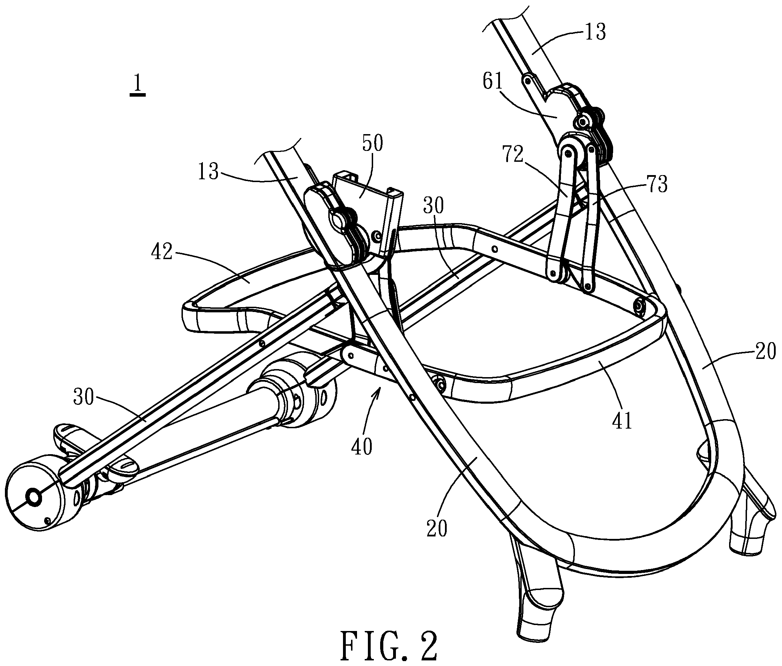

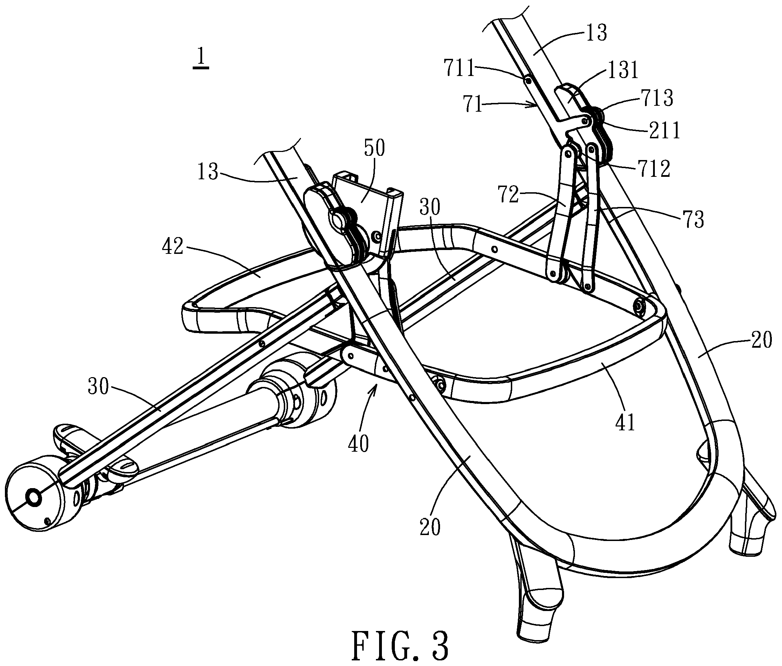

With additional reference to Figs. 2 and 3, each of two lower ends of the main frame body 10 is provided with an upper joint 131 that is formed with an engaging groove, and each of the upper ends of the front legs 20 is provided with a lower joint 211 that is engaged pivotally within the engaging groove in the upper joint 131 of the corresponding lower end of the main frame body 10.

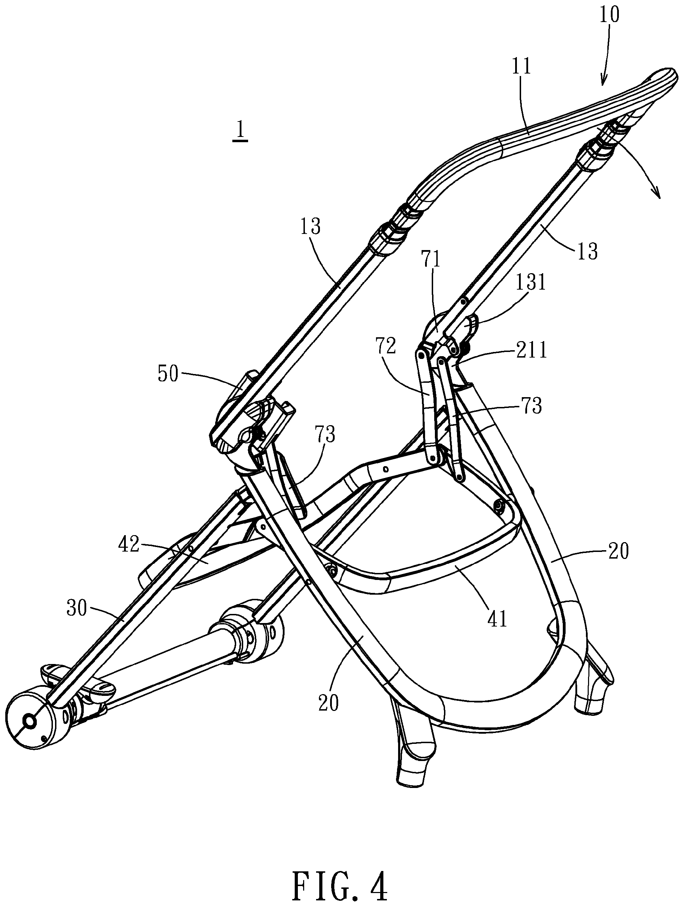

With further reference to Fig. 4, when the stroller fame 1 is folded, due to the presence of the upper joints 131 of the lower frame sections 13 and the lower joints 211 of the front legs 20, the two lower frame sections 13 are pivoted toward the two front legs 20 until they come into contact with the two front legs 20, so that the stroller frame 1 is folded into a compact structure.

With particular reference to Figs. 3, 4, and 5, the basket tube 40 includes a U-shaped basket front tube section 41 and a U-shaped basket rear tube section 42. Two free ends of the basket front tube section 41 are connected respectively and pivotally to two free ends of the basket rear tube section 42 to form a loop-shaped frame, in this embodiment, the loop-shaped frame is a rectangular frame structure. Front end portions of left and right sides of the basket front tube sections 41 are connected respectively and pivotally to the front legs 20. Middle portions of left and right sides of the basket rear tube section 42 are connected respectively and pivotally to the rear legs 30. When the stroller frame 1 is in an unfolded state, the basket front tube section 41 is disposed in front of the basket rear tube section 42, as shown in Fig. 3. The basket rear tube section 42 extends rearwardly and downwardly from the basket front tube section 41, so that the articles in a basket (not shown) disposed on the basket tube 40 can be conveniently and easily taken out.

With particular reference to Figs. 1, 4, and 5, when the stroller frame 1 is folded, front ends of the basket front tube sections 41 are pivoted toward rear ends of the basket rear tube sections 42 until they come into contact the rear ends of the basket rear tube sections 42. It should be noted that, each of the upper joints 131 may be formed integrally with the corresponding lower frame section 13.

The stroller frame 1 further includes two connecting assemblies, each of which includes an upper connecting member 71, a first basket-connecting member 72, and a second basket-connecting member 73.

The structure of one of the connecting assemblies will be described in this paragraph. The upper connecting member 71 is connected fixedly to the lower end of the corresponding lower frame section 13, and is connected pivotally to an upper end of the first basket-connecting member 72. A lower end of the first basket-connecting member 72 is connected pivotally to the basket tube 40. More specifically, in this embodiment, the upper connecting member 71 is generally T-shaped, and has an upper connecting end 711 connected fixedly to the lower end of the corresponding lower frame section 13, a lower connecting end 712 opposite to the upper connecting end 711 and connected pivotally to the upper end of the first basket-connecting member 72, and an intermediate connecting end 713 disposed between the upper and lower connecting ends 711, 712 and connected fixedly to a pivot interconnecting the corresponding upper joint 131 and the corresponding lower joint 211. A pivot interconnecting the basket front and rear tube sections 41, 42 extends rotatably through the lower end of the first basket-connecting member 72. The second basket-connecting member 73 has a lower end connected pivotally to a portion of the basket front tube section 41 adjacent to the corresponding pivotal connection point of the basket front and rear tube sections 41, 42, and an upper end connected pivotally to the corresponding lower frame section 13. More specifically, the upper end of the second basket-connecting member 73 is connected pivotally to a lower end of the corresponding upper joint 131.

As such, the pivotal connection point of the basket front tube section 41 and each of the second basket-connecting members 73 is disposed between the pivot connection point of the basket front tube section 41 and the corresponding front leg 20 and the pivot connection point of the corresponding free end of the basket front tube section 41 and the corresponding free end of the basket rear tube section 42.

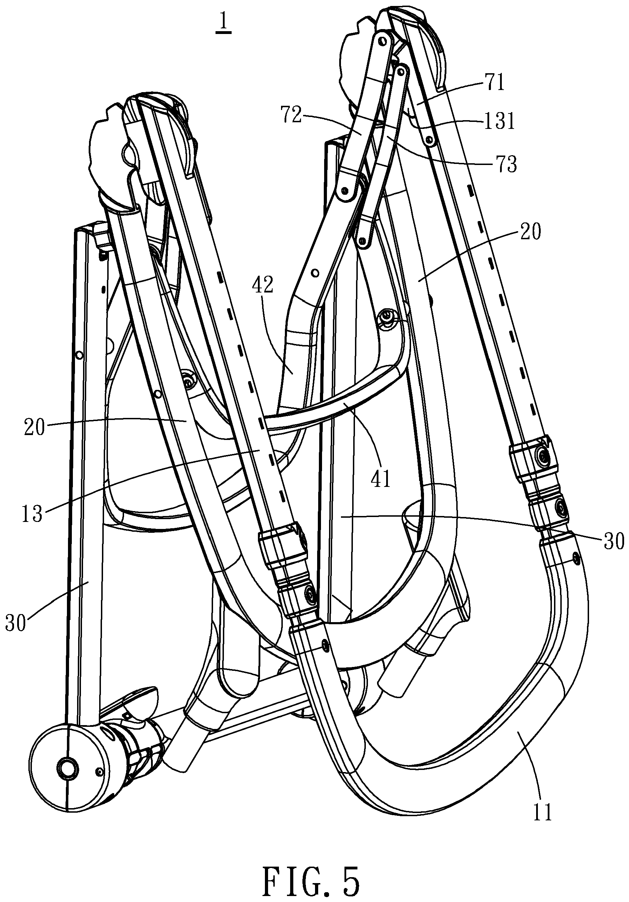

When the stroller frame 1 is folded, the handle 11 is pivoted forwardly so that an assembly of the lower frame sections 13 and the upper connecting members 71 rotates about the middle connecting ends 713. Hence, the lower connecting ends 712 of the upper connecting members 71 are pivoted rearwardly and upwardly to move the first basket-connecting members 72 upwardly, as shown in Fig. 4. At the same time, the second basket-connecting members 73 are also moved upwardly by the lower frame sections 13. Consequently, the front end of the basket front tube section 41 and the rear end of the basket rear tube section 42 are rotated about the pivotal connection points thereof in opposite directions to contact each other, and the front legs 20 and the rear legs 30 rotate to contact each other, so that the stroller frame 1 is folded into a compact structure, as shown in Fig. 5. The upper connecting members 71 are attached to the lower frame sections 13 for wear-reducing purposes. However, if the lower frame sections 13 are made of a wear-resistant material, the upper connecting members 71 may be formed respectively with the lower frame sections 13.

The stroller frame 1 further includes two first housings 61 (see Fig. 2) and two second housings 62 (see Fig. 1). Each of the first housings 61 covers the corresponding upper connecting member 71 and the corresponding upper joint (131). The seat-retaining members 50 are disposed respectively on the first housings 61. Each of the second housings 62 covers the corresponding first and second basket-connecting members 72, 73.

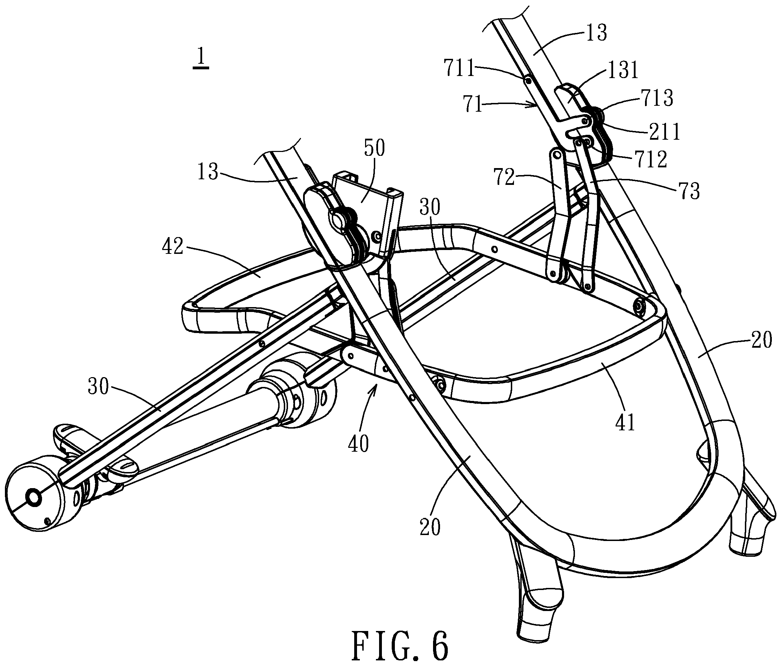

Fig. 6 shows the second preferred embodiment of a stroller frame 1 according to this invention, which is similar in construction to the first preferred embodiment except for modified connecting assemblies. Similar to the first preferred embodiment, each of the connecting assemblies includes an upper connecting member 71, a first basket-connecting member 72, and a second basket-connecting member 73. One of the connecting assemblies will be described in the succeeding paragraph.

In this embodiment, the upper connecting member 71 is generally inverted F-shaped, and has an upper connecting end 711 connected fixedly to the corresponding lower frame section 13, a lower connecting end 712 connected pivotally to the upper end of the second basket-connecting member 73, and an intermediate connecting end 713 disposed between the upper and lower connecting ends 711, 712 and connected fixedly to the pivot interconnecting the corresponding upper joint 131 and the corresponding lower joint 211. In this embodiment, the upper connecting member 71 is covered by a first housing (not shown). The upper end of the second basket-connecting member 73 is connected pivotally to the second connecting end 712 of the upper connecting member 71 and the corresponding first housing 61 by a pivot. The lower end of the first basket-connecting member 73 is connected pivotally to the pivot interconnecting the basket front and rear tube sections 41, 42.

The folding operation of this embodiment is similar to that of the first preferred embodiment.

The seat retained by seat-retaining members 50 my be
a child seat, a bassinet, or a car safety seat.

In view of the above, the stroller frame 1 of this invention has a simple structure, and can be folded into a compact structure. Thus, the object of this invention is achieved.

## Claims

1. A stroller frame (1) including a main frame body (10), two front legs (20), two rear legs (30), a basket tube (40), and two seat-retaining members (50), the main frame body (10) having two lower ends connected respectively and pivotally to upper ends of the front legs (20), the rear legs (30) being connected respectively and pivotally to the front legs (20), each of the two seat-retaining members (50) being disposed at a junction between the main frame body (10) and a corresponding one of the front legs (20), the basket tube (40) including a basket front tube section (41) and a basket rear tube section (42), each of which has two free ends, the two free ends of the basket front tube section (41) being connected respectively and pivotally to the two free ends of the basket rear tube section (42), the basket front tube section (41) being connected pivotally to the front legs (20), the basket rear tube section (42) being connected pivotally to the rear legs (30), the stroller frame (1) further including two connecting assemblies, each of the connecting assemblies including a first basket-connecting member (72) having an upper end connected pivotally to a lower end of the main frame body (10), and a lower end connected pivotally to the basket rear tube section (42), **characterized in that** each of the connecting assemblies further includes a second basket-connecting member (73) having an upper end connected pivotally to a corresponding one of the lower ends of the main frame body (10), and a lower end connected pivotally to the basket front tube section (41).

2. The stroller frame (1) as claimed in Claim 1, further **characterized in that**, when the stroller frame (1) is folded, the basket front and rear tube sections (41, 42) are rotated about two pivotal connection points thereof in opposite directions to contact each other.

3. The stroller frame (1) as claimed in Claim 1, further **characterized by** two second housings (62) each covering the first and second basket-connecting members (72, 73) of a respective one of the connecting assemblies.

4. The stroller frame (1) as claimed in Claim 1, further **characterized in that** the pivotal connection point of the basket front tube section (41) and the second basket-connecting member (73) of each of the connecting assemblies is disposed between the pivotal connection point of the basket front tube section (41) and a corresponding one of the front legs (20) and the pivotal connection point of a corresponding one of the two free ends of the basket front tube section (41) and a corresponding one of the two free ends of the basket rear tube section (42).

5. The stroller frame (1) as claimed in Claim 1, further **characterized in that** each of the two lower ends of the main frame body (10) is provided with an upper joint (131), and each of the upper ends of the front legs (20) is provided with a lower joint (211) that is connected pivotally to the upper joint (131) of a corresponding one of the two lower ends of the main frame body (10).

6. The stroller frame (1) as claimed in Claim 5, further **characterized in that** each of the connecting assemblies further includes an upper connecting member (71) connected fixedly to a respective one of the lower ends of the main frame body (10) and connected pivotally to one of the first and second basket-connecting members (72, 73).

7. The stroller frame (1) as claimed in Claim 6, further **characterized in that** the upper connecting member (71) of each of the connecting assemblies is generally T-shaped, and has an upper connecting end (711) connected fixedly to the corresponding one of the lower ends of the main frame body (10), a lower connecting end (712) opposite to the upper connecting end (711) and connected pivotally to the upper end of the first basket-connecting member (72), and an intermediate connecting end (713) disposed between the upper and lower connecting ends (711, 712) and connected fixedly to a pivot interconnecting the upper joint (131) of the corresponding one of the two lower ends of the main frame body (10) and the lower joint (211) of a corresponding one of the two front legs (20).

8. The stroller frame (1) as claimed in Claim 6, further **characterized in that** the upper connecting member (71) of each of the connecting assemblies is generally inverted F-shaped, and has an upper connecting end (711) connected fixedly to the corresponding one of the lower ends of the main frame body (10), a lower connecting end (712) connected pivotally to the upper end of the second basket-connecting member (73), and an intermediate connecting end (713) disposed between the upper and lower connecting ends (711, 712) and connected fixedly to a pivot interconnecting the upper joint (131) of the corresponding one of the two lower ends of the main frame body (10) and the lower joint (211) of a corresponding one of the two front legs (20).

9. The stroller frame (1) as claimed in Claim 6, further **characterized by** two first housings (61) each covering the upper connecting member (71) of a corresponding one of the connecting assemblies and the upper joint (131) of the corresponding one of the two lower ends of the main frame body (10), the seat-retaining members (50) being disposed respectively on the first housings (61).

10. The stroller frame (1) as claimed in any of preceding claims, **characterized in that** the main frame body (10) includes a handle (11), two upper frame sections (12) connected to and disposed below the handle (11), and two lower frame sections (13) connected respectively and telescopically to and disposed below the upper frame sections (12).

11. The stroller frame (1) as claimed in any of Claims 1 to 9, **characterized in that** the basket rear tube section (42) extends rearwardly and downwardly from the basket front tube section (41).

## Patentansprüche

1. Kinderwagenrahmen (1), aufweisend einen Hauptrahmenkörper (10), zwei Vorderbeine (20), zwei Hinterbeine (30), ein Korbrohr (40) und zwei Sitzhalteelemente (50), wobei der Hauptrahmenkörper (10) zwei untere Enden, die jeweils mit oberen Enden der Vorderbeine (20) verbunden und schwenkbar sind, aufweist, die Hinterbeine (30) jeweils mit den Vorderbeinen (20) verbunden und schwenkbar sind, jedes der zwei Sitzhalteelemente (50) an einer Verbindung zwischen dem Hauptrahmenkörper (10) und einem entsprechenden der Vorderbeine (20) angeordnet ist, das Korbrohr (40) einen Korbvorderrohrabschnitt (41) und einen Korbhinterrohrabschnitt (42) aufweist, von denen jeder zwei freie Enden aufweist, wobei die zwei freien Enden des Korbvorderrohrabschnitts (41) jeweils mit den zwei freien Enden des Korbhinterrohrabschnitts (42) verbunden und schwenkbar sind, der Korbvorderrohrabschnitt (41) schwenkbar mit den Vorderbeinen (20) verbunden ist, der Korbhinterrohrabschnitt (42) schwenkbar mit den Hinterbeine (30) verbunden ist, wobei der Kinderwagenrahmen (1) ferner zwei Verbindungsanordnungen aufweist, jede der Verbindungsanordnungen ein erstes Korbverbindungselement (72) aufweist, das mit einem oberen Ende schwenkbar mit einem unteren Ende des Hauptrahmenkörpers (10) verbunden ist, und ein unteres Ende, das schwenkbar mit dem hinteren Korbrohrabschnitt (42) verbunden ist, **dadurch gekennzeichnet, dass** jede der Verbindungsanordnungen ferner ein zweites Korbverbindungselement (73) aufweist, das ein oberes, schwenkbar mit einem entsprechenden der unteren Enden des Hauptrahmenkörpers (10) verbundenes Ende und ein unteres, schwenkbar mit dem Korbvorderrohrabschnitt (41) verbundenes Ende aufweist.

2. Kinderwagenrahmen (1) nach Anspruch 1, ferner **dadurch gekennzeichnet, dass**, wenn der Kinderwagenrahmen (1) zusammengeklappt ist, die Korbvorder- und -hinterrohrabschnitte (41, 42) um zwei Schwenkverbindungspunkte davon in entgegengesetzten Richtungen gedreht werden, um miteinander in Kontakt zu kommen.

3. Kinderwagenrahmen (1) nach Anspruch 1, ferner **gekennzeichnet durch** zwei Gehäuse (62), die jeweils das erste und das zweite Korbverbindungselement (72, 73) einer der entsprechenden Verbindungsanordnungen abdecken.

4. Kinderwagenrahmen (1) nach Anspruch 1, ferner **dadurch gekennzeichnet, dass** der Schwenkverbindungspunkt des Korbvorderrohrabschnitts (41) und des zweiten Korbverbindungselements (73) jeder der Verbindungsanordnungen zwischen dem Schwenkverbindungspunkt des Korbvorderrohrabschnitts (41) und einem entsprechenden der Vorderbeine (20) und dem Schwenkverbindungspunkt eines entsprechenden der zwei freien Enden des Korbvorderrohrabschnitts (41) und einem entsprechenden der zwei freien Enden des Korbhinterrohrabschnitts (42) angeordnet ist.

5. Kinderwagenrahmen (1) nach Anspruch 1, ferner **dadurch gekennzeichnet, dass** jedes der zwei unteren Enden des Hauptrahmenkörpers (10) mit einem oberen Gelenk (131) versehen ist, und jedes der oberen Enden der Vorderbeine (20) mit einem unteren Gelenk (211) versehen ist, das schwenkbar mit dem oberen Gelenk (131) eines entsprechenden der beiden unteren Enden des Hauptrahmenkörpers (10) verbunden ist.

6. Kinderwagenrahmen (1) nach Anspruch 5, ferner **dadurch gekennzeichnet, dass** jede der Verbindungsanordnungen ferner ein oberes Verbindungselement (71) umfasst, das fest mit einem jeweiligen der unteren Enden des Hauptrahmenkörpers (10) verbunden ist und schwenkbar mit einem der ersten und zweiten Korbverbindungselemente (72, 73) verbunden ist.

7. Kinderwagenrahmen (1) nach Anspruch 6, ferner **dadurch gekennzeichnet, dass** das obere Verbindungselement (71) jeder der Verbindungsanordnungen im Allgemeinen T-förmig ist, und ein oberes Verbindungsende (711) aufweist, das fest mit dem entsprechenden eines der unteren Enden des Hauptrahmenkörpers (10) verbunden ist, ein unteres Verbindungsende (712), gegenüberliegend dem oberen Verbindungsende (711) und das schwenkbar mit dem oberen Ende des ersten Korbverbindungselements (72) verbunden ist, und einem Zwischenverbindungsende (713), das zwischen den oberen und unteren Verbindungsenden (711, 712) angeordnet ist und fest mit einem Drehzapfen verbunden ist, der das obere Gelenk (131) des entsprechenden der zwei unteren Enden des Hauptrahmenkörpers (10) mit dem unteren Gelenk (211) eines entsprechenden der zwei Vorderbeine (20) verbindet.

8. Kinderwagenrahmen (1) nach Anspruch 6, ferner **dadurch gekennzeichnet, dass** das obere Verbindungselement (71) jeder der Verbindungsanordnungen im Allgemeinen die Form eines umgedrehten F hat, und ein oberes Verbindungsende (711) aufweist, das fest mit dem entsprechenden einen der unteren Enden des Hauptrahmenkörpers (10) verbunden ist, ein unteres Verbindungsende (712), das schwenkbar mit dem oberen Ende des zweiten Korbverbindungselements (73) verbunden ist, und ein Zwischenverbindungsende (713), angeordnet zwischen den oberen und unteren Verbindungsenden (711, 712) und das fest mit einem Drehzapfen verbunden ist, der das obere Gelenk (131) des entsprechenden der zwei unteren Enden des Hauptrahmenkörpers (10) mit dem unteren Gelenk (211) eines entsprechenden der zwei Vorderbeine (20) verbindet.

9. Kinderwagenrahmen (1) nach Anspruch 6, ferner **gekennzeichnet durch** zwei erste Gehäuse (61), die jeweils das obere Verbindungselement (71) einer entsprechenden der Verbindungsanordnungen und das obere Gelenk (131) des entsprechenden einen der zwei unteren Enden des Hauptrahmenkörpers (10) abdecken, wobei die Sitzhalteelemente (50) jeweils an den ersten Gehäusen (61) angeordnet sind.

10. Kinderwagenrahmen (1) nach einem der vorhergehenden Ansprüche, **dadurch gekennzeichnet, dass** der Hauptrahmenkörper (10) einen Griff (11), zwei obere Rahmenabschnitte (12), die mit dem Griff (11) verbunden und darunter angeordnet sind, und zwei untere Rahmenabschnitte (13), die jeweils teleskopisch mit den oberen Rahmenabschnitten (12) verbunden und darunter angeordnet sind, umfasst.

11. Kinderwagenrahmen (1) nach einem der Ansprüche 1 bis 9, **dadurch gekennzeichnet, dass** sich der Korbhinterrohrabschnitt (42) nach hinten und nach unten vom Korbvorderrohrabschnitt (41) erstreckt.

## Revendications

1. Châssis de poussette (1) comprenant un corps de châssis principal (10), deux jambes avant (20), deux jambes arrière (30), un tube de support (40) et deux éléments de retenue de siège (50), le corps de châssis principal (10) ayant deux extrémités inférieures raccordées respectivement et de manière pivotante aux extrémités supérieures des jambes avant (20), les jambes arrière (30) étant raccordées respectivement et de manière pivotante aux jambes avant (20), chacun des deux éléments de retenue de siège (50) étant disposé à une jonction entre le corps de châssis principal (10) et une jambe correspondante des jambes avant (20), le tube de support (40) comprenant une section de tube avant de support (41) et une section de tube arrière de support (42), dont chacune a deux extrémités libres, les deux extrémités libres de la section de tube avant de support (41) étant raccordées respectivement et de manière pivotante aux deux extrémités libres de la section de tube arrière de support (42), la section de tube avant de support (41) étant raccordée de manière pivotante aux jambes avant (20), la section de tube arrière de support (42) étant raccordée de manière pivotante aux jambes arrière (30), le châssis de poussette (1) comprenant en outre deux ensembles de raccordement, chacun des ensembles de raccordement comprenant un premier élément de raccordement de support (72) ayant une extrémité supérieure raccordée de manière pivotante à une extrémité inférieure du corps de châssis principal (10), et une extrémité inférieure raccordée de manière pivotante à la section de tube arrière de support (42), **caractérisé en ce que** chacun des ensembles de raccordement comprend en outre un second élément de raccordement de support (73) ayant une extrémité supérieure raccordée de manière pivotante à une extrémité correspondante des extrémités inférieures du corps de châssis principal (10) et une extrémité inférieure raccordée de manière pivotante à la section de tube avant de support (41).

2. Châssis de poussette (1) selon la revendication 1, **caractérisé en outre en ce que**, lorsque le châssis de poussette (1) est plié, les sections de tube avant et arrière de support (41, 42) tournent autour de deux points de raccordement pivotants dans des directions opposées pour être en contact entre elles.

3. Châssis de poussette (1) selon la revendication 1, **caractérisé en outre par** deux seconds boitiers (62) recouvrant chacun les premier et second éléments de raccordement de support (72, 73) d'un ensemble respectif des ensembles de raccordement.

4. Châssis de poussette (1) selon la revendication 1, **caractérisé en outre en ce que** le point de raccordement pivotant de la section de tube avant de support (41) et du second élément de raccordement de support (73) de chacun des ensembles de raccordement est disposé entre le point de raccordement pivotant de la section de tube avant de support (41) et une jambe correspondante des jambes avant (20) et le point de raccordement pivotant d'une extrémité correspondante des deux extrémités libres de la section de tube avant de support (41) et une extrémité correspondante des deux extrémités libres de la section de tube arrière de support (42).

5. Châssis de poussette (1) selon la revendication 1, **caractérisé en outre en ce que** chacune des deux extrémités inférieures du corps de châssis principal (10) est prévue avec un joint supérieur (131), et chacune des extrémités supérieures des jambes avant (20) est prévue avec un joint inférieur (211) qui est raccordé de manière pivotante au joint supérieur (131) d'une extrémité correspondante des deux extrémités inférieures du corps de châssis principal (10) .

6. Châssis de poussette (1) selon la revendication 5, **caractérisé en outre en ce que** chacun des ensembles de raccordement comprend en outre un élément de raccordement supérieur (71) raccordé, de manière fixe, à une extrémité respective des extrémités inférieures du corps de châssis principal (10) et raccordé de manière pivotante à un élément des premier et second éléments de raccordement de support (72, 73).

7. Châssis de poussette (1) selon la revendication 6, **caractérisé en outre en ce que** l'élément de raccordement supérieur (71) de chacun des ensembles de raccordement est généralement en forme de T, et a une extrémité de raccordement supérieure (711) raccordée de manière fixe à l'extrémité correspondante des extrémités inférieures du corps de châssis principal (10), une extrémité de raccordement inférieure (712) opposée à l'extrémité de raccordement supérieure (711) et raccordée de manière pivotante à l'extrémité supérieure du premier élément de raccordement de support (72), et une extrémité de raccordement intermédiaire (713) disposée entre les extrémités de raccordement supérieure et inférieure (711, 712) et raccordée de manière fixe à un pivot interconnectant le joint supérieur (131) de l'extrémité correspondante des deux extrémités inférieures du corps de châssis principal (10) et le joint inférieur (211) d'une jambe correspondante des deux jambes avant (20).

8. Châssis de poussette (1) selon la revendication 6, **caractérisé en outre en ce que** l'élément de raccordement supérieur (71) de chacun des ensembles de raccordement est généralement en forme de F inversé, et a une extrémité de raccordement supérieure (711) raccordée de manière fixe à l'extrémité correspondante des extrémités inférieures du corps de châssis principal (10), une extrémité de raccordement inférieure (712) raccordée de manière pivotante à l'extrémité supérieure du second élément de raccordement de support (73), et une extrémité de raccordement intermédiaire (713) disposée entre les extrémités de raccordement supérieure et inférieure (711, 712) et raccordée de manière fixe à un pivot interconnectant le joint supérieur (131) de l'extrémité correspondante des deux extrémités inférieures du corps de châssis principal (10) et le joint inférieur (211) d'une jambe correspondante des deux jambes avant (20).

9. Châssis de poussette (1) selon la revendication 6, **caractérisé en outre par** deux premiers boitiers (61) recouvrant chacun l'élément de raccordement supérieur (71) d'un ensemble correspondant des ensembles de raccordement et le joint supérieur (131) de l'extrémité correspondante des deux extrémités inférieures du corps de châssis principal (10), les éléments de retenue de siège (50) étant disposés respectivement sur les premiers boitiers (61).

10. Châssis de poussette (1) selon l'une quelconque des revendications précédentes, **caractérisé en ce que** le corps de châssis principal (10) comprend une poignée (11), deux sections de châssis supérieures (12) raccordées à et disposées au-dessous de la poignée (11), et deux sections de châssis inférieures (13) raccordées respectivement et de manière télescopique à et disposées au-dessous des sections de châssis supérieures (12).

11. Châssis de poussette (1) selon l'une quelconque des revendications 1 à 9, **caractérisé en ce que** la section de tube arrière de support (42) s'étend vers l'arrière et vers le bas à partir de la section de tube avant de support (41).
